Europäisches Patentamt

European Patent Office

Office européen des brevets

(19)

(11) Numéro de publication: **0 095 546**
**A1**

(12) ## DEMANDE DE BREVET EUROPEEN

(21) Numéro de dépôt: **82830150.7**

(22) Date de dépôt: **31.05.82**

(51) Int. Cl.³: **B 60 H 3/06,** F 24 F 3/16,
B 01 D 53/02

(43) Date de publication de la demande: **07.12.83**
**Bulletin 83/49**

(71) Demandeur: **Recanatini, Sandro, Via Loretana, 41,**
**I-60021 Camerano (AN) (IT)**

(72) Inventeur: **Recanatini, Sandro, Via Loretana, 41,**
**I-60021 Camerano (AN) (IT)**

(74) Mandataire: **Baldi, Claudio, Viale della Vittoria 97,**
**I-60035 Jesi (Ancona) (IT)**

(84) Etats contractants désignés: **DE FR GB SE**

(54) **Groupe filtrant destiné à être installé au-dessous des bouches de prise d'air extérieur, situées sur le capot des automobiles.**

(57) La présente invention a pour objet un groupe filtrant destiné à être installé au-dessous des bouches de prise d'ai extérieur, situées sur le capot des automobiles, groupe qui se compose d'un élément à boîte (1, 2) d'interception et de canalisation de l'air extérieur et qui contient une barrière d'arrêt (7) aux impuretés solides et aux éventuelles gouttes d'eau ainsi qu'une cartouche (5) contenante des substances capables de dépurer et de régénérer l'air qui les traverse.

EP 0 095 546 A1

- 1 -

Groupe filtrant destiné à être installé au-dessous des bouches de prise
d'air extérieur, situées sur le capot des automobiles.

La présente demande de brevet pour modèle industriel d'utilité concerne un groupe filtrant destiné à être installé au-dessous des bouches de
prise d'air extérieur, situées sur le capot des automobiles, dans le but
de dépurer l'air introduit dans l'habitacle.

Actuellement il n'existe aucun stade filtrant le long des conduits de pri
se et de canalisation de l'air extérieur dans l'habitacle, où trop souvent se répand et stagne un air réellement irrespirable.

En effet, l'air ambiant se charge inévitablement de fumées et de gaz toxi
ques échappés des moteurs à combustion interne et celà, particulièrement
dans les centres urbains, là où le trafic lent et intense cause des taux
très élevés de pollution atmosphérique de l'air ambiant.

Cela saute aux yeux donc, que, l'utilité d'un groupe filtrant soit évidente,un groupe filtrant capable d'arrêter les impurités de nature soli
de, comme par exemple, la poussière, le sable, des particules grasses
etc. et en même temps capable de dépurer l'air ambiant grâce à l'action
de regénération des filtres constitués par des charbons actifs ou par des
substances ayant des propriétés équivalentes.

Dans le but de fournir l'explication la plus claire, la description de l'in
vention se poursuit en se référant aux dessins en annexe, dessins qui
sont reportés uniquement à titre explicatif et non limitatif et où:

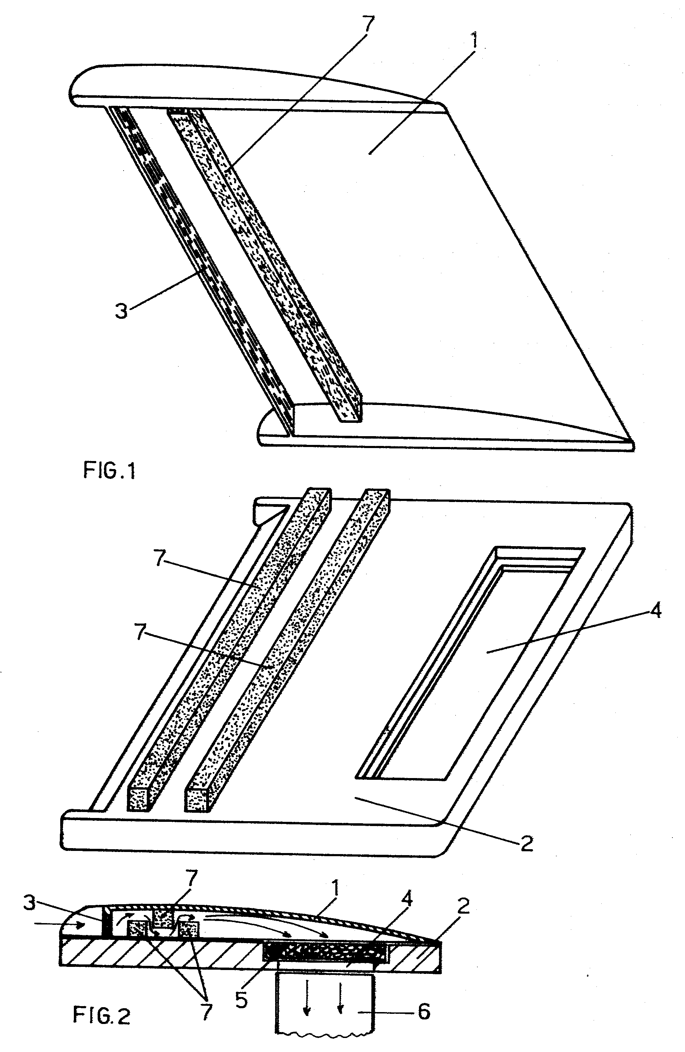

- le dessin n. 1 est une représentation axonométrique de l'élément à boî
te, ouvert, contenant le groupe filtrant, selon l'invention;
- le dessin n. 2 est une section avec un plan vertical, transversale, de l'élément à boîte, fermé, contenant le groupe filtrant, selon l'invention.

Le modèle, selon l'invention et selon une forme préférée de réalisation, se compose d'un élément à boîte formé par deux coques, (1) et (2) super posées et fixées ensemble, entre lesquelles se trouve une grille inter médiaire (3) le long du côté frontal.

La coque inférieure (2) se compose pratiquement d'une plateforme quadran gulaire, apte à être placée et attachée au siège approprié prévu sur le capot de l'automobile, alors que la coque supérieure (1), qui fait fonc tion de couvercle, a généralement un profil externe plus ou moins aero- dynamique.

Lorsque la voiture est en marche, l'air extérieur pénètre, à travers la grille (3), dans l'élément à boîte dont il est question et en ressort in férieurement par une ouverture (4), prévue sur la plate-forme (2) d'où il s'écoule dans le conduit (6) qui se trouve immédiatement en-dessous, conduit de prise et de canalisation de l'air vers les bouches de ventilation disposées à l'intérieur de l'habitacle.

Selon l'invention, on place et fixe, dans la section d'écoulement, (4) susdite, un filtre dépurateur composé d'une cartouche (5), interchangea ble, contenante des charbons actifs ou d'autres substances ayant les pro priétés de regénération équivalentes.

Pour éviter que d'éventuelles gouttes d'eau puissent arriver jusqu'à la cartouche susdite, en privant donc les substances qui y sont contenues de leur propriété de regénération, on a prévu dans le modèle selon l'in vention, une barrière d'interception et d'arrêt de l'eau qui pénètre dans l'élément à boîte dont il est question plus haut.

La dite barrière, placée immédiatement en-dessous de la grille (3), se compose d'une série de lames parallèles (7), en matière spongieuse, com me par exemple en mousse (ou caoutchouc), lames très rapprochées et fixées alternativement sur la coque supérieure (1) et sur la plate-forme inférieure (2), de manière à ce que le flux d'air qui rentre doive con-

0095546

tinuellement subir des variations successives et continues de trajectoire, pendant lesquelles les éventuelles gouttes d'eau seront évidemment séparées (gouttes d'eau en suspension dans le courant d'air externe) air canalisé à travers la grille frontale (3).

La barrière ainsi conçue et qui à première vue pourrait être simplement substituée par une paroi unique et de division, en matière spongieuse, permet au contraire de résoudre l'inconvénient qui se vérifierait au cours de cette seconde hypothèse, résolutive dans le cas de congèlement de l'eau arrêtée et absorbée par l'unique paroi spongieuse susdite.

La paroi ainsi conçue, en effet, ne serait plus perméable à l'air provenant de l'extérieur obstruant pratiquement le flux d'air vers le filtre (5) et vers le conduit de canalisation (6).

La barrière constituée de lames (7) permet évidemment d'arrêter également les impurités solides, comme par exemple la poussière, le sable, les particules grasses etc..

Le matériel employé, les dimensions et le profil externe de l'élément à boîte décrit et illustré pourront être les plus variés, selon les exigences et les préférences.

- 4 -

Revendications

1) Bouche de prise d'air extérieur pour l'alimentation de l'installation de ventilation de l'habitacle des automobiles, qui se compose d'un élément à boîte formé par deux coques superposées et fixées entre elles, séparées par une grille intermédiaire le long du côté frontal pour l'interception de l'air, apte à être placé et fixé au siège approprié prévu sur le capot de la voiture, caractérisé par le fait de contenir un groupe filtrant et de dépuration de l'air extérieur intercepté, et qui comprend:
-une barrière, immédiatement au-dessous de la grille susdite, qui se compose d'une série de lames parallèles, en matière spongieuse, comme par exemple le caoutchouc, lames rapprochées et fixées alternativement sur la coque supérieure et sur celle inférieure, de manière à ce que le flux de l'air entrant doive subir des variations de trajectoires continues et successives, suffisantes à séparer les éventuelles gouttes d'eau ou impurités solides en suspension dans le courant d'air extérieur canalisé à boîte en question;
-un filtre dépurateur et de regénération, en-dessous de la dite barrière, qui se compose d'une cartouche, interchangeable, qui contient des charbons actifs ou d'autres substances avant les propriétés équivalentes, placé et fixé dans la section d'écoulement pratiquée sur la coque inférieure d'où l'air intercepté se répand dans le conduit qui se trouve immédiatement en-dessous, conduit de prise et de canalisation de l'air extérieur vers les bouches de ventilation disposées à l'intérieur de l'habitacle de l'automobile.

0095546

FIG.1

FIG.2

TAV.I-1

0095546

Office européen
des brevets

**RAPPORT DE RECHERCHE EUROPEENNE**

Numéro de la demande

EP 82 83 0150

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| | --- | | B 60 H 3/06 |
| X | GB-A-1 182 595 (B.A.F.FILTERS LTD.) *Page 1, ligne 72 - page 3, ligne 19; figures 1-7* | 1 | F 24 F 3/16 B 01 D 53/02 |
| | --- | | |
| A | EP-A-0 033 784 (HOLTER) *Page 14, paragraphe 3 - page 17, paragraphe 2; figures 5,6* | 1 | |
| | --- | | |
| A | US-A-4 242 951 (BEMISS) *Page de garde; figures 1-3* | 1 | |
| | --- | | |
| A | DE-A-2 813 662 (HOLTER) *En entier* | 1 | |
| | --- | | |
| A | US-A-3 125 941 (GROUT) *Colonne 1, ligne 61 - colonne 3, lignes 15; figures 1,2* | 1 | **DOMAINES TECHNIQUES RECHERCHES (Int. Cl. 3)** |
| | --- | | |
| E | DE-A-3 103 889 (KLEINWACHTER) *En entier* | 1 | B 60 H F 24 F B 01 D A 61 L |
| | --- | | |
| A | DE-A-2 140 452 (BMW) | | |
| | --- | | |
| A | FR-A-2 425 337 (HOLTER) | | |
| | ----- | | |

Le présent rapport de recherche a été établi pour toutes les revendications

| Lieu de la recherche | Date d'achèvement de la recherche | Examinateur |
|---|---|---|
| LA HAYE | 31-01-1983 | ESPEEL R.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

\& : membre de la même famille, document correspondant

OEB Form 1503. 03.82